# EUROPEAN PATENT APPLICATION

(11) **EP 4 427 957 A1**
(43) Date of publication of application: **11.09.2024**
(21) Application number: 24157414.4
(22) Date of filing: 13.02.2024
(51) Int. Cl.: B60H 1/00, B60H 1/32

(54) **THERMAL MANAGEMENT SYSTEM**

(30) Priority: 09.03.2023 JP 2023036611
(71) Applicant: TOYOTA JIDOSHA KABUSHIKI KAISHA, Toyota-shi, Aichi-ken, 471-8571 (JP)
(72) Inventor: SUZUKI, Tomoaki, TOYOTA-SHI, AICHI-KEN, 471-8571 (JP)
(74) Representative: Cabinet Beau de Loménie

(57) **Abstract**

A thermal management system (1) includes: an energy storage device (173) configured to exchange heat with a first flow path (170b); a drive device (133) configured to exchange heat with a second flow path (130b); a radiator (122) provided on a third flow path (130a); a chiller (160) provided on a fourth flow path (170a); and a switching device (180, 190). The switching device (180, 190) is configured to, when performing heating of the energy storage device (173), disconnect the first flow path (170b) from the other flow paths, cause a first circuit in which a heat medium circulates through the second flow path (130b) formed, and cause a second circuit in which the heat medium circulates through the third flow path (130a) and the fourth flow path (170a) formed.

## Description

### BACKGROUND OF THE INVENTION

### 1. Field of the Invention

The present disclosure relates to a thermal management system.

### 2. Description of Related Art

Japanese Unexamined Patent Application Publication No. 2010-272395 (JP 2010-272395 A) discloses an electrified vehicle. The electrified vehicle includes an energy storage device (battery), an inverter, a motor, and a control device. The energy storage device is connected to the inverter. The inverter is connected to the motor. The control device controls the current of the energy storage device by controlling switching of the inverter. The control device thus controls heat that is generated due to power loss in the internal resistance of the energy storage device. As a result, the control device can perform heating control for increasing the temperature of the energy storage device using the current of the energy storage device (self-heating of the energy storage device).

### SUMMARY OF THE INVENTION

In electrical devices such as electrified vehicles, it is sometimes important to effectively use heat generated by a drive device including an inverter and a motor. It is also desired to efficiently perform heating of an energy storage device.

The present disclosure provides a thermal management system that can achieve both effective use of heat generated by a drive device and efficient heating of an energy storage device.

A thermal management system according to an aspect of the present disclosure is mounted on an electrical device. The thermal management system includes: a first flow path, a second flow path, a third flow path, and a fourth flow path each configured to allow a heat medium to flow through the flow path; an energy storage device configured to exchange heat with the heat medium flowing through the first flow path; a drive device configured to exchange heat with the heat medium flowing through the second flow path and supply a driving force to the electrical device; a radiator provided on the third flow path; a chiller provided on the fourth flow path; and a switching device configured to switch a connection state between the first flow path, the second flow path, the third flow path, and the fourth flow path. The switching device is configured to, when performing heating of the energy storage device: disconnect the first flow path from the other flow paths, cause a first circuit in which the heat medium circulates through the second flow path formed, and cause a second circuit in which the heat medium circulates through the third flow path and the fourth flow path formed.

In the thermal management system according to the above aspect, the switching device may be configured to cause a third circuit in which the heat medium circulates through the first flow path and the second flow path formed and cause the second circuit in which the heat medium circulates through the third flow path and the fourth flow path formed when a temperature of the heat medium circulating through the second flow path is higher than a temperature of the energy storage device during the heating of the energy storage device.

The thermal management system according to the above aspect may further include: a refrigeration cycle including a working medium; and a high temperature circuit including another heat medium different from the heat medium. The electrical device may include an electrified vehicle. The radiator may be configured to exchange heat between air and the heat medium. The chiller may be configured to exchange heat between the heat medium and the working medium. The refrigeration cycle may include: a compressor configured to compress the working medium flowing out of the chiller; and a condenser configured to exchange heat between the working medium discharged from the compressor and the other heat medium. The high temperature circuit may include: a pump configured to send the other heat medium to the condenser; and a heater core configured to heat air to be supplied to a vehicle cabin of the electrified vehicle by using the other heat medium. The compressor and the pump may be configured to be driven when a request for heating the vehicle cabin is given during the heating of the energy storage device.

The thermal management system according to the above aspect may further include a control device configured to control the switching device.

According to the present disclosure, it is possible to provide the thermal management system that can achieve both effective use of heat generated by the drive device and efficient heating of the energy storage device.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 schematically shows an electrified vehicle on which a thermal management system according to a first embodiment of the present disclosure is mounted.
FIG. 2 shows the configuration of the thermal management system according to the first embodiment;
FIG. 3 shows the configuration of a thermal management circuit in the thermal management system;
FIG. 4 schematically shows a heating mode of the thermal management circuit when heating a battery;
FIG. 5 schematically shows a heat adding mode of the thermal management circuit when heating the battery;
FIG. 6 is a flowchart showing details of control of the thermal management system;
FIG. 7 shows the configuration of a thermal management system according to a second embodiment of the present disclosure;
FIG. 8 shows the configuration of a thermal management circuit in the thermal management system;
FIG. 9 schematically shows a heating mode of the thermal management circuit when heating a battery;
FIG. 10 schematically shows a heat adding mode of the thermal management circuit when heating the battery;
FIG. 11 shows the configuration of a thermal management circuit according to a third embodiment of the present disclosure; and
FIG. 12 shows a circuit configuration including a battery, a converter, an inverter, and a motor.

### DETAILED DESCRIPTION OF EMBODIMENTS

A first embodiment of the present disclosure will be described in detail below with reference to the drawings. The same or corresponding parts are denoted by the same signs throughout the drawings, and description thereof will not be repeated.

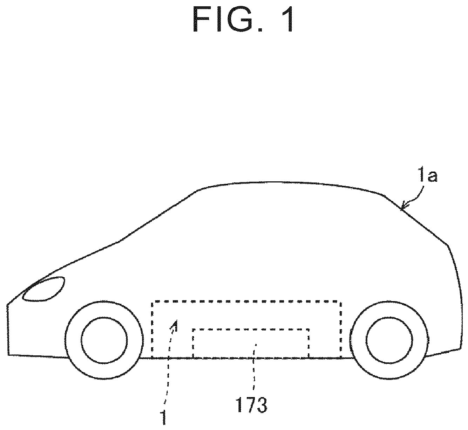

Hereinafter, a configuration in which a thermal management system according to the present disclosure is mounted on an electrified vehicle 1a (see FIG. 1) will be described as an example. The electrified vehicle 1a is preferably a vehicle equipped with a battery 173 for traveling, and is, for example, a battery electric vehicle (BEV). The electrified vehicle 1a may be a hybrid electric vehicle (HEV), a plug-in hybrid electric vehicle (PHEV), or a fuel cell electric vehicle (FCEV). However, the thermal management system according to the present disclosure is not limited to vehicle applications. The electrified vehicle 1a is an example of the "electrical device" of the present disclosure.

### First Embodiment

### Overall Configuration

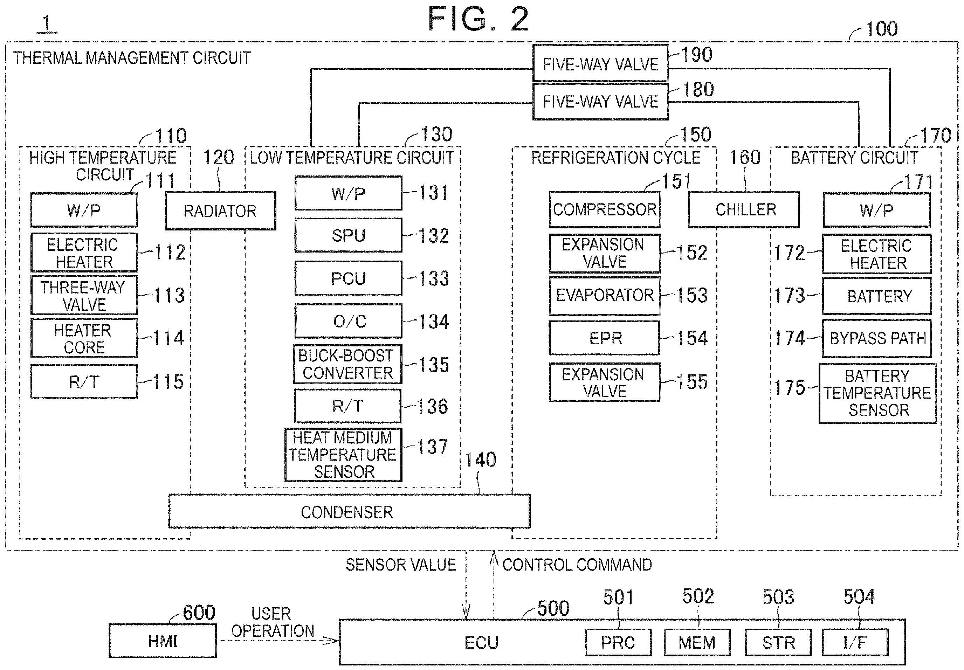

FIG. 2 shows an example of the overall configuration of a thermal management system 1 according to a first embodiment of the present disclosure. The thermal management system 1 includes a thermal management circuit 100, an electronic control unit (ECU) 500, and a human machine interface (HMI) 600. The ECU 500 is an example of the "control device" of the present disclosure.

The thermal management circuit 100 is configured such that a medium that exchanges heat (water etc.) flows therethrough. As shown in FIG. 2, the thermal management circuit 100 includes, for example, a high temperature circuit 110, a radiator 120, a low temperature circuit 130, a condenser 140, a refrigeration cycle 150, a chiller 160, a battery circuit 170, a five-way valve 180, and a five-way valve 190. The five-way valves 180, 190 are examples of the "switching device" of the present disclosure.

The high temperature circuit 110 includes, for example, a water pump (W/P) 111, an electric heater 112, a three-way valve 113, a heater core 114, and a reservoir tank (R/T) 115, and a heat medium (water etc.) (not shown).

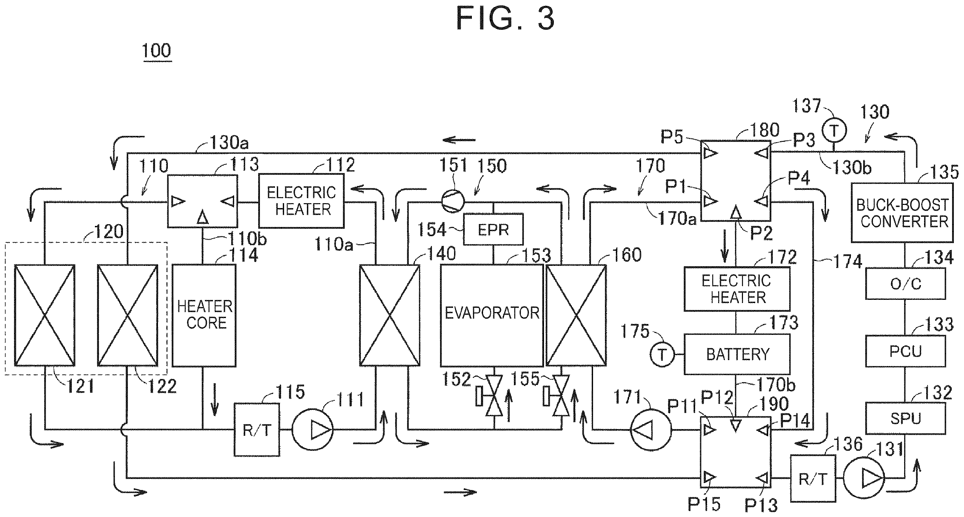

The radiator 120 is connected to (i.e., shared by) both the high temperature circuit 110 and the low temperature circuit 130. The radiator 120 includes a high temperature (HT) radiator 121 (see FIG. 3) and a low temperature (LT) radiator 122 (see FIG. 3). The low temperature radiator 122 is an example of the "radiator" of the present disclosure.

The low temperature circuit 130 includes, for example, a water pump 131, a smart power unit (SPU) 132, a power control unit (PCU) 133, an oil cooler (O/C) 134, a buck-boost converter 135, a reservoir tank 136, a heat medium temperature sensor 137, and a heat medium (water etc.) (not shown). The PCU 133 and the oil cooler 134 are examples of the "drive device" of the present disclosure.

The condenser 140 is connected to both the high temperature circuit 110 and the refrigeration cycle 150.

The refrigeration cycle 150 includes, for example, a compressor 151, an expansion valve 152, an evaporator 153, an evaporative pressure regulator (EPR) 154, an expansion valve 155, and a working medium (water, a medium having a boiling point lower than that of water, etc.) (not shown).

The chiller 160 is connected to both the refrigeration cycle 150 and the battery circuit 170.

The battery circuit 170 includes, for example, a water pump 171, an electric heater 172, a battery 173, a bypass path 174, and a battery temperature sensor 175. The water pump 171 and the battery 173 are examples of the "pump" and the "energy storage device" of the present disclosure, respectively.

Each of the five-way valves 180, 190 is connected to the low temperature circuit 130 and the battery circuit 170. The configuration of the thermal management circuit 100 will be described in detail later with reference to FIG. 3.

The ECU 500 controls the thermal management circuit 100. The ECU 500 includes a processor 501, a memory 502, a storage 503, and an interface 504.

The processor 501 is, for example, a central processing unit (CPU) or a micro-processing unit (MPU). The memory 502 is, for example, a random access memory (RAM). The storage 503 is a rewritable nonvolatile memory such as a hard disk drive (HDD), a solid state drive (SSD), or a flash memory. The storage 503 stores system programs including an operating system (OS), and control programs including computer-readable codes that are necessary for control calculations. The processor 501 implements various processes by reading the system programs and the control programs, loading them into the memory 502, and executing them. The interface 504 controls communication between the ECU 500 and components of the thermal management circuit 100.

The ECU 500 generates control commands based on sensor values acquired from various sensors (e.g., battery temperature sensor 175 and heat medium temperature sensor 137) included in the thermal management circuit 100, user operations received by the HMI 600, etc., and outputs the generated control commands to the thermal management circuit 100. The ECU 500 may be divided into a plurality of ECUs, one for each function. Although FIG. 2 illustrates an example in which the ECU 500 includes one processor 501, the ECU 500 may include a plurality of processors. The same applies to the memory 502 and the storage 503.

As used herein, the "processor" is not limited to a processor in a narrow sense that performs processes by a stored program method, and may include hardwired circuitry such as an application-specific integrated circuit (ASIC) and a field-programmable gate array (FPGA). Therefore, the term "processor" may be read as processing circuitry that performs processes defined in advance by computer-readable codes and/or hardwired circuitry.

The HMI 600 is, for example, a display with a touch panel, an operation panel, or a console. The HMI 600 receives user operations for controlling the thermal management system 1. The HMI 600 outputs signals indicating user operations to the ECU 500.

### Configuration of Thermal Management Circuit

FIG. 3 shows an example of the configuration of the thermal management circuit 100 according to the first embodiment. As shown in FIG. 3, the high temperature circuit 110 includes a flow path 110a connecting the water pump 111, the condenser 140, the electric heater 112, the three-way valve 113, the high temperature radiator 121, the reservoir tank 115, and the water pump 111 in this order, and a flow path 110b connecting the three-way valve 113, the heater core 114, and the reservoir tank 115 in this order.

The heat medium (e.g., water) in the high temperature circuit 110 flows through at least one of a first path and a second path. The first path is a path in which the heat medium circulates through "water pump 111 - condenser 140 - electric heater 112 - three-way valve 113 - heater core 114 - reservoir tank 115 - water pump 111" in this order. The second path is a path in which the heat medium circulates through "water pump 111 - condenser 140 - electric heater 112 - three-way valve 113 - high temperature radiator 121 - reservoir tank 115 - water pump 111" in this order. The three-way valve 113 switches the flow path of the heat medium so that the heat medium flows through at least one of the first path and the second path.

The water pump 111 circulates the heat medium in the high temperature circuit 110 according to a control command from the ECU 500. The condenser 140 exchanges heat between the heat medium and the working medium in the refrigeration cycle 150. The electric heater 112 heats the heat medium. The heater core 114 heats air to be supplied to a vehicle cabin (not shown) of the electrified vehicle 1a using the heat medium. The reservoir tank 115 stores part of the heat medium flowing in the high temperature circuit 110 to maintain the pressure and amount of heat medium in the high temperature circuit 110.

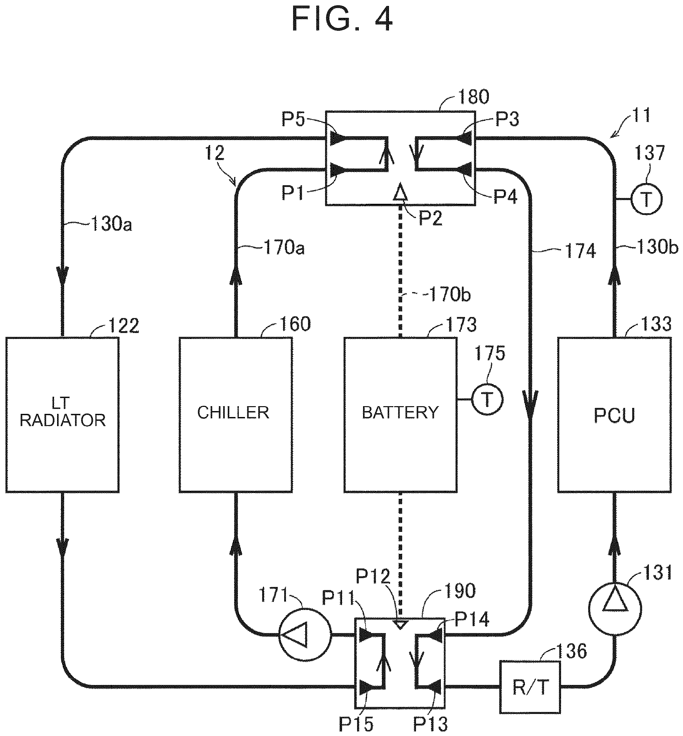

As shown in FIGS. 3 and 4, the low temperature circuit 130 includes a flow path 130a connecting the five-way valve 180, the low temperature radiator 122, and the five-way valve 190 in this order, and a flow path 130b connecting the five-way valve 190, the reservoir tank 136, the water pump 131, the SPU 132, the PCU 133, the oil cooler 134, the buck-boost converter 135, and the five-way valve 180 in this order. The flow path 130b is in thermal contact with the SPU 132, the PCU 133, the oil cooler 134, and the buck-boost converter 135. The flow path 130a is an example of the "third flow path" of the present disclosure, and the flow path 130b is an example of the "second flow path" of the present disclosure.

The heat medium (e.g., water) in the low temperature circuit 130 flows through a path in which the heat medium circulates through "water pump 131 - SPU 132 - PCU 133 - oil cooler 134 - buck-boost converter 135 - five-way valve 180 - low temperature radiator 122 - five-way valve 190 - reservoir tank 136 - water pump 131" in this order.

The water pump 131 circulates the heat medium in the low temperature circuit 130 according to a control command from the ECU 500. The SPU 132 controls charge and discharge of the battery 173 according to a control command from the ECU 500. The PCU 133 converts direct current (DC) power supplied from the battery 173 to alternating current (AC) power to supply the AC power to a motor (not shown) contained in a transaxle according to a control command from the ECU 500. The oil cooler 134 circulates lubricating oil for the motor by using an electrical oil pump (EOP) (not shown). The oil cooler 134 cools the transaxle through heat exchange between the heat medium circulating in the low temperature circuit 130 and the lubricating oil for the motor. The SPU 132, the PCU 133, the oil cooler 134, and the buck-boost converter 135 are cooled by the heat medium circulating in the low temperature circuit 130. The reservoir tank 136 stores part of the heat medium flowing in the low temperature circuit 130 to maintain the pressure and amount of heat medium in the low temperature circuit 130. The heat medium temperature sensor 137 detects the temperature of the heat medium flowing in the low temperature circuit 130. The heat medium temperature sensor 137 detects, for example, the temperature of the heat medium flowing out of the buck-boost converter 135. Each of the five-way valves 180, 190 switches the path of the heat medium in the low temperature circuit 130 and the battery circuit 170 according to a control command from the ECU 500. The low temperature radiator 122 is located near the high temperature radiator 121. The heat medium flowing in the low temperature radiator 122 exchanges heat with the heat medium flowing in the high temperature radiator 121. Instead of the oil cooler 134, the transaxle may be provided in the low temperature circuit 130.

The working medium in the refrigeration cycle 150 flows through at least one of a first path and a second path. The first path is a path in which the working medium circulates through "compressor 151 - condenser 140 - expansion valve 152 - evaporator 153 - EPR 154 - compressor 151" in this order. The second path is a path in which the working medium circulates through "compressor 151 - condenser 140 - expansion valve 155 - chiller 160 - compressor 151" in this order. The expansion valve 152 and the expansion valve 155 switch the flow path of the working medium so that the working medium flows through at least one of the first path and the second path.

The compressor 151 compresses the gas-phase working medium flowing out of the chiller 160. The condenser 140 condenses the working medium by exchanging heat between the gas-phase working medium discharged from the compressor 151 and the heat medium flowing through the high temperature circuit 110. The expansion valve 152 and the expansion valve 155 expand the working medium flowing out of the condenser 140. The evaporator 153 evaporates the working medium by exchanging heat between the working medium flowing out of the expansion valve 152 and air to be supplied to the vehicle cabin of the electrified vehicle. The evaporative pressure regulator 154 regulates the pressure of the working medium flowing out of the evaporator 153.

As shown in FIGS. 3 and 4, the battery circuit 170 includes a flow path 170a connecting the five-way valve 190, the water pump 171, the chiller 160, and the five-way valve 180 in this order, and a flow path 170b connecting the five-way valve 180, the electric heater 172, the battery 173, and the five-way valve 190 in this order. The flow path 170b is in thermal contact with the battery 173. The flow path 170a is an example of the "fourth flow path" of the present disclosure, and the flow path 170b is an example of the "first flow path" of the present disclosure.

The heat medium in the battery circuit 170 (the same heat medium as the heat medium flowing through the low temperature circuit 130) flows through at least one of a first path and a second path. The first path is a path in which the heat medium circulates through "water pump 171 - chiller 160 - five-way valve 180 - electric heater 172 - battery 173 - five-way valve 190 - water pump 171" in this order. The second path is a path in which the heat medium circulates through "water pump 171 - chiller 160 - five-way valve 180 - bypass path 174 - five-way valve 190 - water pump 171" in this order. The five-way valve 180 and the five-way valve 190 switch the first path and the second path so that the heat medium flows through at least one of the first path and the second path.

The water pump 171 circulates the heat medium in the battery circuit 170 according to a control command from the ECU 500. The chiller 160 cools the heat medium circulating in the battery circuit 170 by exchanging heat between the working medium circulating in the refrigeration cycle 150 and the heat medium circulating in the battery circuit 170. The electric heater 172 heats the heat medium according to a control command from the ECU 500. The battery 173 supplies electric power for traveling to the motor contained in the transaxle. The battery 173 can be driven so that the temperature of the battery 173 increases. This control (hereinafter referred to as "heating control") is performed by the ECU 500. The battery 173 may be heated with the electric heater 172 or may be cooled with the chiller 160. The bypass path 174 connects the five-way valve 180 and the five-way valve 190 so that the heat medium bypasses the electric heater 172 and the battery 173. When the heat medium flows through the bypass path 174, a change in temperature of the heat medium associated with heat absorption and heat dissipation between the heat medium and the battery 173 is reduced. The battery temperature sensor 175 detects the temperature of the battery 173.

The five-way valve 180 includes five ports P1 to P5. The port P1 is an inlet port into which the heat medium flows from the chiller 160. The port P2 is an outlet port from which the heat medium flows toward the electric heater 172 and the battery 173 of the battery circuit 170. The port P3 is an inlet port into which the heat medium that has passed through the SPU 132, the PCU 133, the oil cooler 134, and the buck-boost converter 135 of the low temperature circuit 130 flows. The port P4 is an outlet port from which the heat medium flows toward the bypass path 174 of the battery circuit 170. The port P5 is an outlet port from which the heat medium flows toward the low temperature radiator 122.

The five-way valve 190 includes five ports P11 to P15. The port P11 is an outlet port from which the heat medium flows toward the chiller 160. The port P12 is an inlet port into which the heat medium that has passed through the electric heater 172 and the battery 173 of the battery circuit 170 flows. The port P13 is an outlet port from which the heat medium flows toward the SPU 132, the PCU 133, the oil cooler 134, and the buck-boost converter 135 of the low temperature circuit 130. The port P14 is an inlet port into which the heat medium flows from the bypass path 174 of the battery circuit 170. The port P15 is an inlet port into which the heat medium flows from the low temperature radiator 122.

### Modes

FIG. 4 is a conceptual diagram showing an overview of a predetermined mode (hereinafter sometimes referred to as "heating mode") of the thermal management circuit 100 that is set by controlling the five-way valves 180, 190. The connection state between the flow paths 130a, 130b, 170a, 170b and the bypass path 174 is switched by controlling the five-way valves 180, 190. The thermal management circuit 100 can thus be switched to a plurality of modes including the heating mode.

Some electrified vehicles are not equipped with an engine. Therefore, there are cases where it is not possible to use engine waste heat to heat a component in an electrified vehicle that is to be heated. Accordingly, it is sometimes important to effectively use heat generated by a drive device including an inverter and a motor. It is also desired to efficiently perform self-heating of an energy storage device. That is, it is desired to efficiently perform self-heating of the energy storage device while allowing effective use of the heat generated by the drive device.

In the first embodiment, the ECU 500 controls the five-way valves 180, 190 to set the heating mode shown in FIG. 4 when performing heating of the battery 173. Specifically, in the heating mode, the five-way valve 180 forms a path communicating between the port P1 and the port P5 and a path communicating between the port P3 and the port P4, and the five-way valve 190 forms a path communicating between the port P11 and the port P15 and a path communicating between the port P13 and the port P14.

As a result, a first closed circuit 11 (see FIG. 4) connecting the flow path 130b corresponding to the "second flow path" and the bypass path 174 and a second closed circuit 12 connecting the flow path 130a corresponding to the "third flow path" and the flow path 170a corresponding to the "fourth flow path" are formed, and the flow path 170b corresponding to the "first flow path" is disconnected from the other flow paths. That is, the battery 173 is disconnected from (independent of) the other circuits.

In the heating mode shown in FIG. 4, during the heating control by the ECU 500, that is, during self-heating in which the battery 173 increases its temperature, cooling of the battery 173 with the heat medium flowing through the first closed circuit 11 and the second closed circuit 12 is suppressed, and heat generated by the PCU 133 and the transaxle (not shown) is accumulated in the heat medium flowing through the first closed circuit 11.

As a result, it is possible to achieve both effective use of the heat generated by the drive device such as the PCU 133 and efficient self-heating of the battery 173.

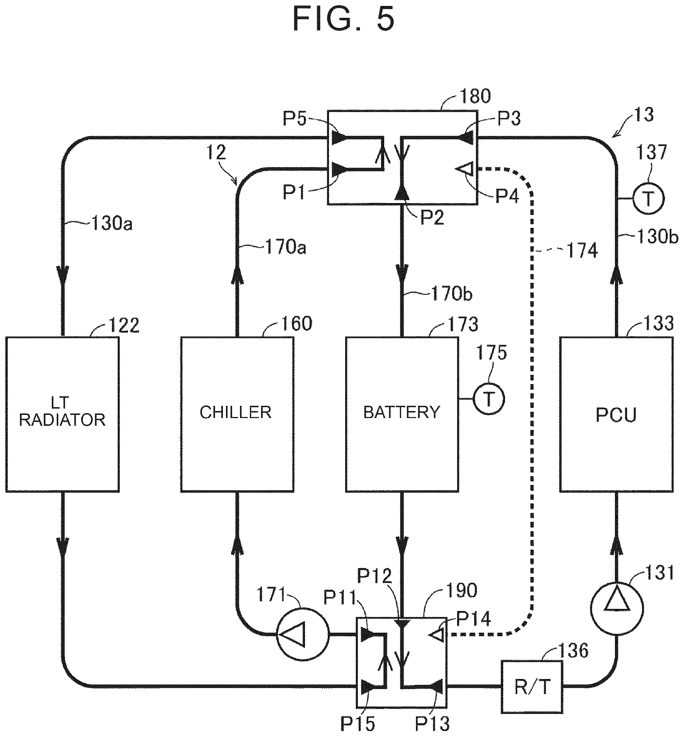

During the heating control of the battery 173 in the heating mode, the ECU 500 controls the five-way valves 180, 190 to set a heat adding mode shown in FIG. 5 when the temperature of the heat medium circulating through the first closed circuit 11 (detected value from the heat medium temperature sensor 137) is higher than the temperature of the battery 173 (detected value from the battery temperature sensor 175). Specifically, in the heat adding mode, the five-way valve 180 forms a path communicating between the port P3 and the port P2 and a path communicating between the port P1 and the port P5, and the five-way valve 190 forms a path communicating between the port P11 and the port P15 and a path communicating between the port P12 and the port P13.

As a result, a third closed circuit 13 (see FIG. 5) connecting the flow path 170b corresponding to the "first flow path" and the flow path 130b corresponding to the "second flow path" and the second closed circuit 12 are formed, and the bypass path 174 is disconnected from the other flow paths.

In the heat adding mode shown in FIG. 5, the heat generated by the PCU 133 and the transaxle (not shown) during the self-heating of the battery 173 is supplied to the battery 173 via the heat medium, thereby effectively heating the battery 173.

### Method for Controlling Thermal Management Circuit

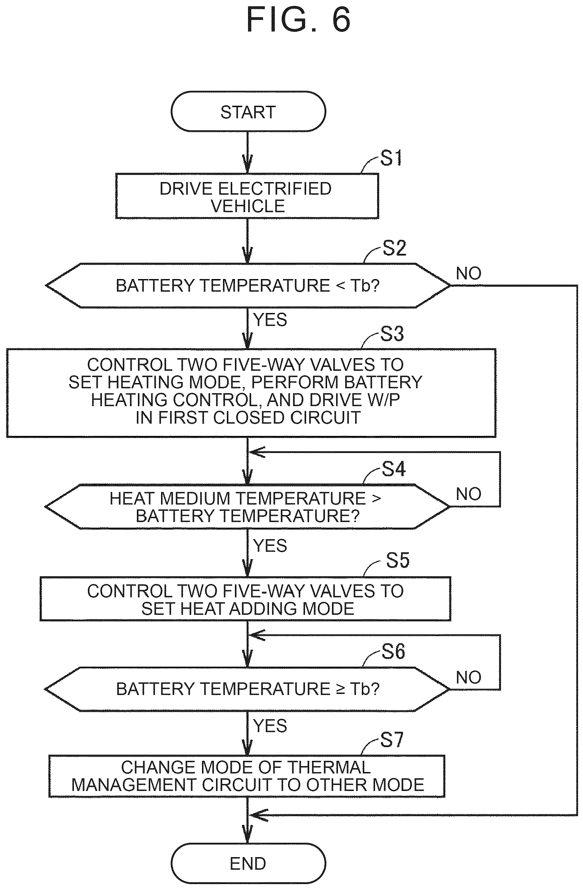

Next, a method for controlling the thermal management system 1 will be described with reference to a flowchart shown in FIG. 6. The flow shown in FIG. 6 is merely illustrative, and details of the control in the present disclosure are not limited to the example shown in FIG. 6.

The ECU 500 first drives the electrified vehicle 1a (activates a traveling system) (step S1). Specifically, a start button (not shown) of the electrified vehicle 1a is pressed to electrically connect the PCU 133 and the battery 173 (by a system main relay (SMR) (not shown)). By receiving a predetermined internal signal of the electrified vehicle 1a, the ECU 500 detects that the electrified vehicle 1a has been driven.

The ECU 500 determines whether the temperature of the battery 173 (detected value from the battery temperature sensor 175) is lower than a reference temperature Tb [°C] (step S2). The reference temperature Tb may be set to, for example, 10°C.

When the temperature of the battery 173 is equal to or higher than the reference temperature Tb (No in S2), the ECU 500 ends the control. When the temperature of the battery 173 is lower than the reference temperature Tb (Yes in S2), the ECU 500 controls the five-way valves 180, 190 so that the thermal management circuit 100 enters the heating mode shown in FIG. 4, performs heating control of the battery 173, and drives the water pump 131 in the first closed circuit 11 (step S3).

Then, the ECU 500 determines whether the temperature of the heat medium flowing through the first closed circuit 11 (detected value from the heat medium temperature sensor 137) is higher than the temperature of the battery 173 (step S4). When the temperature of the heat medium is equal to or lower than the temperature of the battery 173 (No in S4), the ECU 500 returns to step S4 again.

When the temperature of the heat medium is higher than the temperature of the battery 173 (Yes in S4), the ECU 500 controls the five-way valves 180, 190 to set the heat adding mode (step S5). The heat generated by the drive device such as the PCU 133 is thus supplied to the battery 173 via the heat medium, thereby increasing the temperature of the battery 173.

Then, the ECU 500 determines whether the temperature of the battery 173 is equal to or higher than the reference temperature Tb (step S6). When the temperature of the battery 173 is lower than the reference temperature Tb (No in S6), the ECU 500 returns to step S6 again.

When the temperature of the battery 173 is equal to or higher than the reference temperature Tb (Yes in S6), the ECU 500 controls the five-way valves 180, 190 so that the thermal management circuit 100 enters another mode different from the heat adding mode (step S7).

When a request for heating the vehicle cabin is given from the user of the electrified vehicle 1a after the electrified vehicle 1a has been driven (after step S1), the ECU 500 may drive the compressor 151 in the refrigeration cycle 150 and the water pump 111 in the high temperature circuit 110. Then, heat obtained by the heat medium from the air in the low temperature radiator 122 is supplied to the refrigeration cycle via the chiller 160, and is supplied from the refrigeration cycle 150 to the heater core 114 in the high temperature circuit 110 via the condenser 140.

As described above, in the thermal management system 1 according to the first embodiment, the ECU 500 controls the five-way valves 180, 190 during the heating control of the battery 173 to form the first closed circuit 11 connecting the flow path 130b and the bypass path 174 and the second closed circuit 12 connecting the flow path 130a and the flow path 170a, and disconnect the flow path 170b from the other flow paths. Therefore, during the self-heating of the battery 173, the cooling of the battery 173 with the heat medium flowing through the first closed circuit 11 and the second closed circuit 12 is suppressed, and the heat generated by the PCU 133 and the transaxle (not shown) is effectively accumulated in the heat medium flowing through the first closed circuit 11. It is thus possible to achieve both effective use of the heat generated by the drive device such as the PCU 133 and efficient self-heating of the battery 173.

When a heating request is given after the electrified vehicle 1a has been driven, the ECU 500 drives the compressor 151 and the water pump 111. Then, the heat obtained by the heat medium from the air in the low temperature radiator 122 is supplied to the refrigeration cycle via the chiller 160. The power consumption of the compressor 151 required to generate heat to be supplied from the refrigeration cycle 150 to the heater core 114 in the high temperature circuit 110 via the condenser 140 is thus reduced.

During the heating control in the heating mode, the ECU 500 may drive the water pump 131 in the first closed circuit 11 at a low rotation speed to obtain a flow rate of the heat medium that can cool the drive device such as the PCU 133 at the minimum necessary level, and may increase the rotation speed of the water pump 131 when controlling the five-way valves 180, 190 to set the heat adding mode.

### Second Embodiment

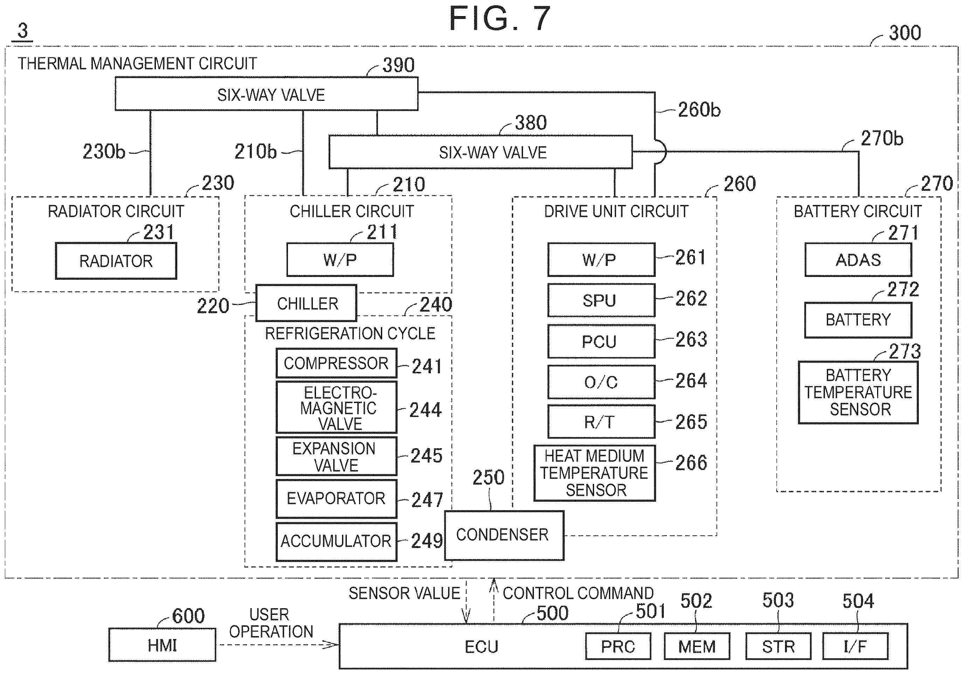

Next, a thermal management circuit 300 according to a second embodiment of the present disclosure will be described with reference to FIGS. 7 to 9. In the second embodiment, only portions different from those in the first embodiment will be described, and description of the same structures, functions, and effects as those in the first embodiment will not be repeated.

### Overall Configuration

FIG. 7 shows the configuration of a thermal management system according to the second embodiment of the present disclosure. A thermal management system 3 is different from the thermal management system 1 (see FIG. 1) according to the first embodiment in that the thermal management system 3 includes the thermal management circuit 300 instead of the thermal management circuit 100.

### Configuration of Thermal Management Circuit

The thermal management circuit 300 includes, for example, a chiller circuit 210, a chiller 220, a radiator circuit 230, a refrigeration cycle 240, a condenser 250, a drive unit circuit 260, a battery circuit 270, a six-way valve 380, and a six-way valve 390. The six-way valves 380, 390 are examples of the "switching device" of the present disclosure.

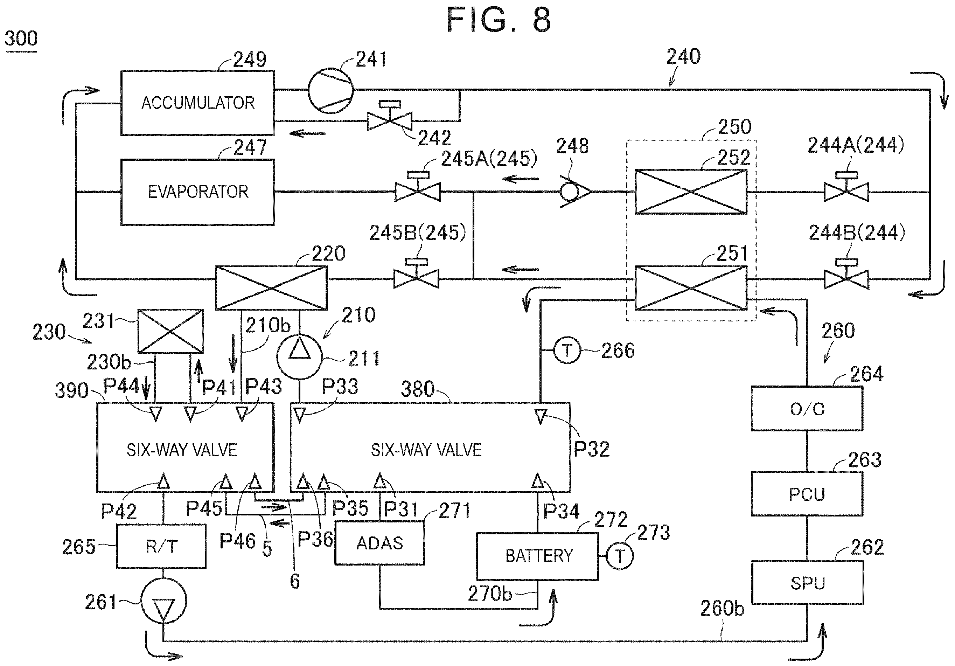

As shown in FIG. 8, the six-way valve 380 includes six ports P31 to P36, and the six-way valve 390 includes six ports P41 to P46. The six-way valve 380 is connected to the six-way valve 390. Specifically, the port P35 of the six-way valve 380 and the port P45 of the six-way valve 390 are connected by a connection flow path 5, and the port P36 of the six-way valve 380 and the port P46 of the six-way valve 390 are connected by a connection flow path 6. The connection flow path 5 and the connection flow path 6 are examples of the "switching device" of the present disclosure.

The chiller circuit 210 includes a water pump (W/P) 211 and a flow path 210b connecting "six-way valve 380 (port P33) - water pump 211 - chiller 220 - six-way valve 390 (port P43)" in this order. The water pump 211 is an example of the "pump" of the present disclosure, and the flow path 210b is an example of the "fourth flow path" of the present disclosure.

The chiller 220 is connected to (shared by) both the chiller circuit 210 and the refrigeration cycle 240. The chiller 220 exchanges heat between the heat medium circulating in the chiller circuit 210 and the working medium circulating in the refrigeration cycle 240.

The radiator circuit 230 includes a radiator 231 and a flow path 230b connecting "six-way valve 390 (port P41) - radiator 231 - six-way valve 390 (port P44)" in this order. The radiator 231 exchanges heat between the heat medium flowing through the radiator circuit 230 and air outside the vehicle. The flow path 230b is an example of the "third flow path" of the present disclosure.

The refrigeration cycle 240 includes, for example, a compressor 241, electromagnetic valves 244 (244A, 244B), expansion valves 245 (245A, 245B), an evaporator 247, and an accumulator 249.

As shown in FIG. 8, the electromagnetic valves 244 include a first electromagnetic valve 244A and a second electromagnetic valve 244B. The expansion valves 245 include a first expansion valve 245A and a second expansion valve 245B. The opening degrees of the electromagnetic valves 244A, 244B and the expansion valves 245A, 245B can be adjusted.

As shown in FIG. 8, the condenser 250 includes a water-cooled condenser 251 and an air-cooled condenser 252. The water-cooled condenser 251 is connected to both the refrigeration cycle 240 and the drive unit circuit 260. The water-cooled condenser 251 exchanges heat between the gas-phase working medium discharged from the compressor 241 and the heat medium flowing in the drive unit circuit 260.

In the example shown in FIG. 8, the refrigeration cycle 240 includes an electromagnetic valve 242. The electromagnetic valve 242 is connected in parallel with the compressor 241. The electromagnetic valve 242 adjusts the flow rate of the working medium that is discharged from the compressor 241 and is to be returned to the accumulator 249 according to a control command from the ECU 500.

The working medium in the refrigeration cycle 240 flows through any one of a first path, a second path, a third path, and a fourth path.

The first path is a path in which the working medium circulates through "compressor 241 - first electromagnetic valve 244A - air-cooled condenser 252 - check valve 248 - first expansion valve (electromagnetic valve) 245A - evaporator 247 - accumulator 249 - compressor 241" in this order.

The second path is a path in which the working medium circulates through "compressor 241 - first electromagnetic valve 244A - air-cooled condenser 252 - check valve 248 - second expansion valve (electromagnetic valve) 245B - chiller 220 - accumulator 249 - compressor 241" in this order.

The third path is a path in which the working medium circulates through "compressor 241 - second electromagnetic valve 244B - water-cooled condenser 251 - first expansion valve 245A - evaporator 247 - accumulator 249 - compressor 241" in this order.

The fourth path is a path in which the working medium circulates through "compressor 241 - second electromagnetic valve 244B - water-cooled condenser 251 - second expansion valve 245B - chiller 220 - accumulator 249 - compressor 241" in this order.

The electromagnetic valves 244A, 244B and the expansion valves 245A, 245B switch the first path, the second path, the third path, and the fourth path so that the working medium flows through any one of the first path, the second path, the third path, and the fourth path.

The accumulator 249 removes the liquid-phase working medium from the working medium in a gas-liquid mixed state. The accumulator 249 thus reduces or eliminates the possibility that the liquid-phase working medium may flow into the compressor 241 when the liquid-phase working medium is not completely evaporated by the evaporator 247.

The drive unit circuit 260 includes, for example, a water pump 261, an SPU 262, a PCU 263, an oil cooler 264, a reservoir tank 265, and a flow path 260b connecting "six-way valve 390 (port P42) - reservoir tank 265 - water pump 261 - SPU 262 - PCU 263 - oil cooler 264 - water-cooled condenser 251 - six-way valve 380 (port P32)" in this order. A heat medium temperature sensor 266 is provided in the flow path 260b. The flow path 260b is an example of the "second flow path" of the present disclosure, and the PCU 263 and the oil cooler 264 are examples of the "drive device" of the present disclosure. A system including the PCU 263, the oil cooler 264, and a battery 272 is an example of the "traveling system" of the present disclosure.

The drive unit circuit 260 may include a transaxle instead of the oil cooler 264. In the drive unit circuit 260, heat exchange may be performed between heat generated by supplying electric power to a stator without rotating a rotor of the motor and the heat medium flowing in the drive unit circuit 260.

The battery circuit 270 includes, for example, advanced driver-assistance systems (ADAS) 271, the battery 272, and a flow path 270b connecting "six-way valve 380 (port P31) - ADAS 271 - battery 272 - six-way valve 380 (port P34)" in this order. A battery temperature sensor 273 is provided to the battery 272. The flow path 270b is an example of the "first flow path" of the present disclosure.

The ADAS 271 includes, for example, adaptive cruise control (ACC), auto speed limiter (ASL), lane keeping assist (LKA), pre-crash safety (PCS), and lane departure alert (LDA). The battery circuit 270 may include an autonomous driving system (ADS) in addition to the ADAS 271.

### Modes

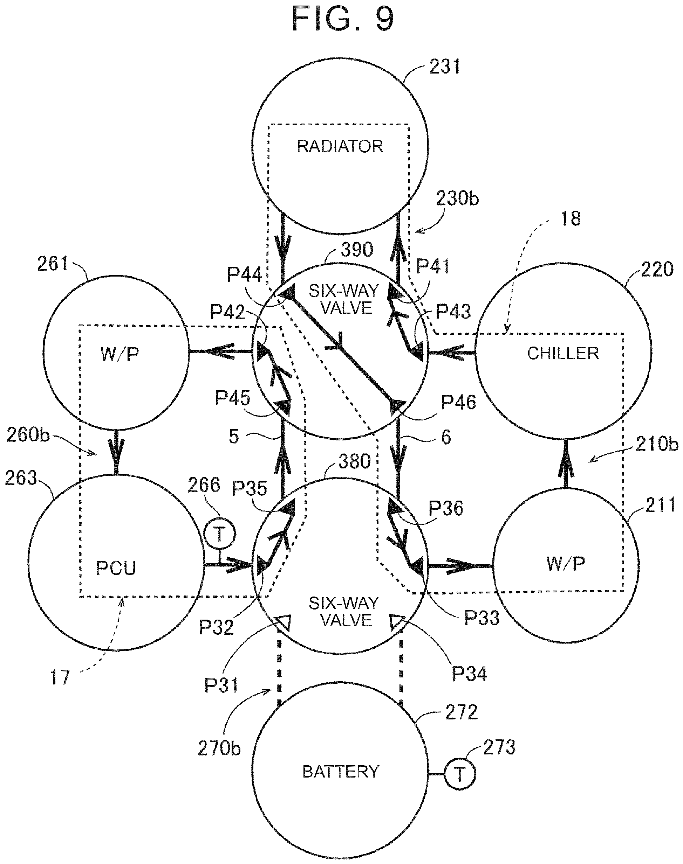

FIG. 9 is a conceptual diagram showing an overview of a predetermined mode (hereinafter sometimes referred to as "heating mode") of the thermal management circuit 300 that is set by controlling the six-way valves 380, 390. The connection state between the flow paths 210b, 230b, 260b, 270b is switched by controlling the six-way valves 380, 390. The thermal management circuit 300 can thus be switched to a plurality of modes including the heating mode.

In the present embodiment, the ECU 500 controls the six-way valves 380, 390 to set the heating mode shown in FIG. 9 when performing heating of the battery 272. Specifically, in the heating mode, the six-way valve 380 forms a path communicating between the port P32 and the port P35 and a path communicating between the port P33 and the port P36, and the six-way valve 390 forms a path communicating between the port P41 and the port P43, a path communicating between the port P42 and the port P45, and a path communicating between the port P44 and the port P46.

As a result, a fourth closed circuit 17 (see FIG. 9) connecting the flow path 260b corresponding to the "second flow path" and the connection flow path 5 and a fifth closed circuit 18 (see FIG. 9) connecting the flow path 210b corresponding to the "fourth flow path", the flow path 230b corresponding to the "third flow path", and the connection flow path 6 are formed, and the flow path 270b corresponding to the "first flow path" is disconnected from the other flow paths. That is, the battery 272 is disconnected from (independent of) the other circuits.

Also in the heating mode shown in FIG. 9, during the heating control by the ECU 500, cooling of the battery 272 with the heat medium flowing through the fourth closed circuit 17 and the fifth closed circuit 18 is suppressed, and heat generated by the PCU 263 and the transaxle (not shown) is accumulated in the heat medium flowing through the fourth closed circuit 17.

As a result, it is possible to achieve both effective use of the heat generated by the drive device such as the PCU 263 and efficient self-heating of the battery 272.

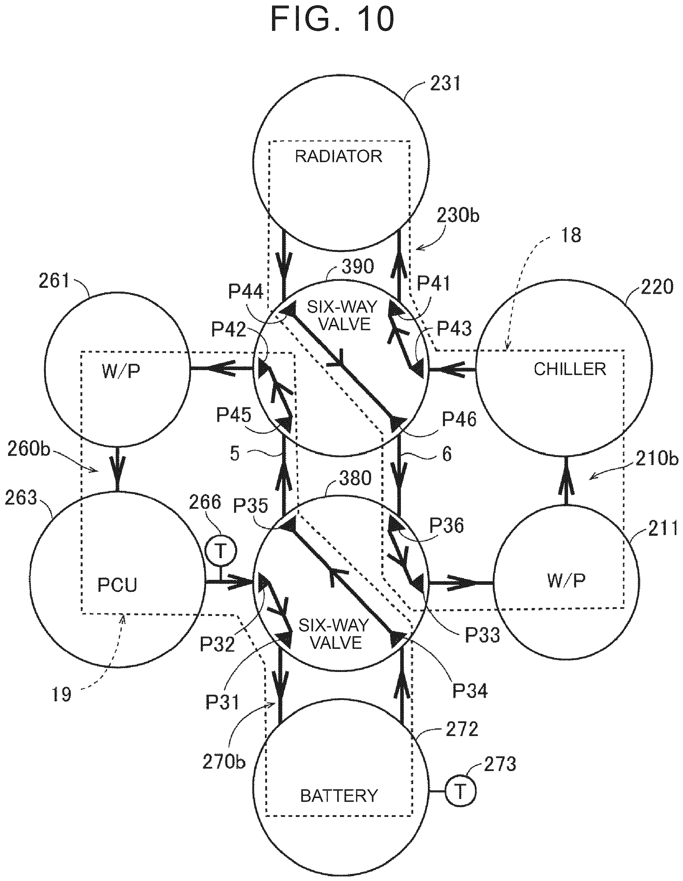

During the heating control of the battery 272 in the heating mode, the ECU 500 controls the six-way valves 380, 390 to set a heat adding mode shown in FIG. 10 when the temperature of the heat medium circulating through the fourth closed circuit 17 (detected value from the heat medium temperature sensor 266) is higher than the temperature of the battery 272 (detected value from the battery temperature sensor 273). Specifically, in the heat adding mode, the six-way valve 380 forms a path communicating between the port P31 and the port P32, a path communicating between the port P33 and the port P36, and a path communicating between the port P34 and the port P35, and the six-way valve 390 forms a path communicating between the port P41 and the port P43, a path communicating between the port P42 and the port P45, and a path communicating between the port P44 and the port P46.

As a result, a sixth closed circuit 19 (see FIG. 10) connecting the flow path 270b corresponding to the "first flow path", the connection flow path 5, and the flow path 260b corresponding to the "second flow path" and the fifth closed circuit 18 are formed.

In the heat adding mode shown in FIG. 10, the heat generated by the PCU 263 and the transaxle (not shown) during the self-heating of the battery 272 is supplied to the battery 272 via the heat medium, thereby effectively heating the battery 272.

### Method for Controlling Thermal Management Circuit

Since details of control of the thermal management system 3 in the present embodiment are substantially the same as the details of the control in the first embodiment, only differences from the details of the control in the first embodiment will be described below.

That is, in the present embodiment, in step S3, the ECU 500 controls the six-way valves 380, 390 so that the thermal management circuit 300 enters the heating mode shown in FIG. 9, performs heating control of the battery 272, and drives the water pump 261 in the fourth closed circuit 17. In step S5, the ECU 500 controls the six-way valves 380, 390 so that the thermal management circuit 300 enters the heat adding mode shown in FIG. 10.

### Third Embodiment

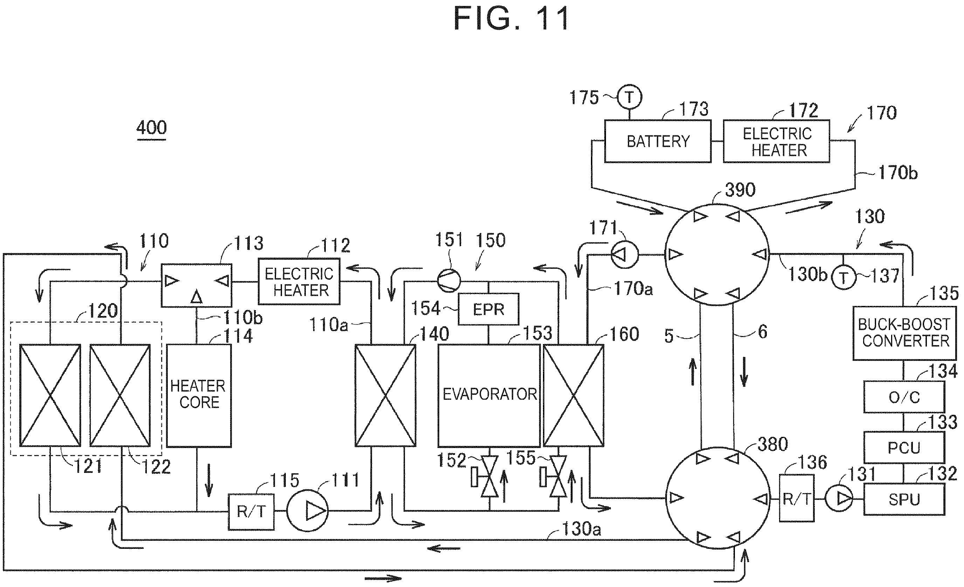

Next, a thermal management circuit 400 according to a third embodiment of the present disclosure will be described with reference to FIG. 11. In the third embodiment, only portions different from those in the first embodiment will be described, and description of the same structures, functions, and effects as those in the first embodiment will not be repeated.

### Overall Configuration

A thermal management system (not shown) according to the present embodiment is different from the thermal management system 1 (see FIG. 1) according to the first embodiment in that the thermal management system includes the thermal management circuit 400 instead of the thermal management circuit 100.

The thermal management circuit 400 is different from the thermal management circuit 100 in that the thermal management circuit 400 includes the six-way valves 380, 390 instead of the five-way valves 180, 190. In other words, the thermal management circuit 400 corresponds to the thermal management circuit 300 in the second embodiment with the high temperature circuit 110 in the first embodiment added thereto. The six-way valves 380, 390 are examples of the "switching device" of the present disclosure.

The modes set in the thermal management circuit 400 by switching the six-way valves 380, 390 are the same as the modes described in the second embodiment.

Although an example in which the thermal management circuit 100 includes the high temperature circuit 110 has been described in the first embodiment, the high temperature circuit 110 may be omitted in the thermal management circuit 100.

The above embodiments illustrate an example in which the heating control of the battery is performed at the start of driving of the electrified vehicle 1a (when the traveling system is activated). However, the timing to start the heating control is not limited to this. For example, the heating control may be performed when the temperature of the battery is lower than a predetermined threshold (e.g., 10°C). In this case, the ECU may acquire the detected value of the battery temperature at predetermined intervals (e.g., every hour).

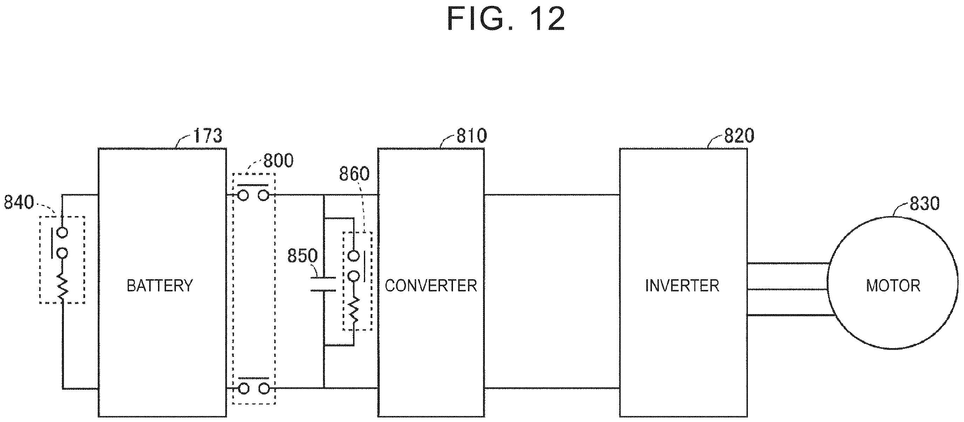

The heating control that is an example of the means for heating the battery 173 will be described with reference to FIG. 12. The battery 173 is connected to a converter 810 via a system main relay (SMR) 800. The converter 810 is connected to an inverter 820. The inverter 820 is connected to a motor 830. A discharge circuit 840 including a switch and a resistive element is connected to the battery 173. A smoothing capacitor 850 is provided between the battery 173 and the converter 810. A discharge circuit 860 composed of a switch and a resistive element is connected in parallel with the smoothing capacitor 850. FIG. 12 is representatively illustrated based on the configuration of the first embodiment. However, the same configuration may be applied to the other embodiments.

The heating control of the battery 173 may include, for example, control for electrically disconnecting the SMR 800 and turning on the switch of the discharge circuit 840. A current thus flows through a closed circuit formed by the battery 173 and the discharge circuit 840. The heating control of the battery 173 may include control for turning off the switch of the discharge circuit 840 and turning on the SMR 800 and the switch of the discharge circuit 860. A current thus flows through a closed circuit formed by the battery 173, the SMR 800, and the discharge circuit 860. The heating control of the battery 173 may include control for turning on the SMR 800 and turning off the switches of the discharge circuits 840, 860 to cause a current adjusted so that no torque is generated in the motor 830 to flow.

The heating control described above is an example of the means for heating the battery 173 when the temperature of the battery 173 is lower than the reference temperature Tb. In each embodiment, the timing when the ECU 500 controls the switching device (five-way valves 180, 190 or six-way valves 380, 390) to set the heating mode is not limited to the timing when the heating control is performed.

The switching device is switched not only by the ECU 500 (control device) mounted on the electrified vehicle 1a. The switching device may form the circuits of the heating mode based on a signal received from the outside of the electrified vehicle 1a, etc.

It will be understood by those skilled in the art that the exemplary embodiments described above are specific examples of the aspects described below.

### First Aspect

A thermal management system mounted on an electrical device, the thermal management system including: a first flow path, a second flow path, a third flow path, and a fourth flow path each configured to allow a heat medium to flow through the flow path; an energy storage device configured to exchange heat with the heat medium flowing through the first flow path; a drive device configured to exchange heat with the heat medium flowing through the second flow path and supply a driving force to the electrical device; a radiator located in the third flow path; a chiller located in the fourth flow path; and a switching device configured to switch a connection state between the first flow path, the second flow path, the third flow path, and the fourth flow path, in which the switching device is configured to, when performing heating of the energy storage device, disconnect the first flow path from the other flow paths, provide a circuit in which the heat medium circulates through the second flow path, and provide a circuit in which the heat medium circulates through the third flow path and the fourth flow path.

In the thermal management system, when performing the heating of the energy storage device, cooling of the energy storage device with the heat medium flowing through the second flow path or the heat medium flowing through the third flow path and the fourth flow path is suppressed, and heat generated by the drive device is effectively accumulated in the heat medium flowing through the second flow path. It is thus possible to achieve both effective use of the heat generated by the drive device and efficient heating of the energy storage device.

### Second Aspect

The thermal management system according to the first aspect, in which the switching device is configured to provide a circuit in which the heat medium circulates through the first flow path and the second flow path and a circuit in which the heat medium circulates through the third flow path and the fourth flow path when a temperature of the heat medium circulating through the second flow path is higher than a temperature of the energy storage device during the heating of the energy storage device.

In this aspect, the heat generated by the operation of the drive device is supplied to the energy storage device via the heat medium, thereby effectively heating the energy storage device.

### Third Aspect

The thermal management system according to the first or second aspect, further including: a refrigeration cycle including a working medium; and a high temperature circuit including another heat medium different from the heat medium, in which the electrical device includes an electrified vehicle, the radiator is configured to exchange heat between air and the heat medium, the chiller is configured to exchange heat between the heat medium and the working medium, the refrigeration cycle includes: a compressor configured to compress the working medium flowing out of the chiller; and a condenser configured to exchange heat between the working medium discharged from the compressor and the other heat medium, the high temperature circuit includes: a pump configured to send the other heat medium to the condenser; and a heater core configured to heat air to be supplied to a vehicle cabin of the electrified vehicle by using the other heat medium, and the compressor and the pump are driven when a request for heating the vehicle cabin is given during the heating of the energy storage device.

In this aspect, the heat obtained by the heat medium from the air in the radiator is supplied to the refrigeration cycle via the chiller. The power consumption of the compressor required to generate heat to be supplied from the refrigeration cycle to the high temperature circuit via the condenser is thus reduced.

The embodiments disclosed herein should be construed as illustrative in all respects and not restrictive. The scope of the invention is defined by the claims rather than by the above description of the embodiment, and includes all modifications within the meaning and scope equivalent to those of the claims.

## Claims

1. A thermal management system (1, 2, 3) mounted on an electrical device (1a), the thermal management system (1, 2, 3) comprising:
a first flow path (170b, 270a, 270b), a second flow path (130b, 260a, 260b), a third flow path (130a, 230a, 230b), and a fourth flow path (170a, 210a, 210b) each configured to allow a heat medium to flow through;
an energy storage device (173, 272) configured to exchange heat with the heat medium flowing through the first flow path (170b, 270a, 270b);
a drive device (133, 263) configured to exchange heat with the heat medium flowing through the second flow path (130b, 260a, 260b) and supply a driving force to the electrical device (1a);
a radiator (122, 231) provided on the third flow path (130a, 230a, 230b);
a chiller (160, 220) provided on the fourth flow path (170a, 210a, 210b); and
a switching device (180, 190, 280, 380, 390) configured to switch a connection state between the first flow path (170b, 270a, 270b), the second flow path (130b, 260a, 260b), the third flow path (130a, 230a, 230b), and the fourth flow path (170a, 210a, 210b), wherein
the switching device (180, 190, 280, 380, 390) is configured to, when performing heating of the energy storage device (173, 272):
disconnect the first flow path (170b, 270a, 270b) from the other flow paths;
cause a first circuit in which the heat medium circulates through the second flow path (130b, 260a, 260b) formed; and
cause a second circuit in which the heat medium circulates through the third flow path (130a, 230a, 230b) and the fourth flow path (170a, 210a, 210b) formed.

2. The thermal management system (1, 2, 3) according to claim 1, wherein the switching device (180, 190, 280, 380, 390) is configured to cause a third circuit in which the heat medium circulates through the first flow path (170b, 270a, 270b) and the second flow path (130b, 260a, 260b) and cause the second circuit in which the heat medium circulates through the third flow path (130a, 230a, 230b) and the fourth flow path (170a, 210a, 210b) formed, when a temperature of the heat medium circulating through the second flow path (130b, 260a, 260b) is higher than a temperature of the energy storage device (173, 272) during the heating of the energy storage device (173, 272).

3. The thermal management system (1, 2, 3) according to claim 1 or 2, further comprising:
a refrigeration cycle (150, 240) including a working medium; and
a high temperature circuit (110) including another heat medium different from the heat medium, wherein
the electrical device (1a) includes an electrified vehicle,
the radiator (122, 231) is configured to exchange heat between air and the heat medium,
the chiller (160, 220) is configured to exchange heat between the heat medium and the working medium,
the refrigeration cycle (150, 240) includes:
a compressor (151, 241) configured to compress the working medium flowing out of the chiller (160, 220); and
a condenser (140, 250) configured to exchange heat between the working medium discharged from the compressor (151, 241) and the other heat medium,
the high temperature circuit includes:
a pump (111) configured to send the other heat medium to the condenser (140, 250); and
a heater core (114) configured to heat air to be supplied to a vehicle cabin of the electrified vehicle by using the other heat medium, and
the compressor (151, 241) and the pump (111) are configured to be driven when a request for heating the vehicle cabin is given during the heating of the energy storage device (173, 272).

4. The thermal management system (1, 2, 3) according to any of claims 1 to 3, further comprising a control device (500) configured to control the switching device (180, 190, 280, 380, 390).
